# EUROPEAN PATENT SPECIFICATION

(11) **EP 3 354 360 B1**
(45) Date of publication and mention of the grant of the patent: **29.07.2020**
(21) Application number: 16849031.6
(22) Date of filing: 23.09.2016
(51) Int. Cl.: B21B 1/22, B21B 27/02, C23C 2/12, C23C 2/26, B32B 15/01, C22C 38/00, C22C 38/02, C22C 38/04, C22C 38/06, C23C 2/06, C21D 9/46

(54) **METHOD FOR MANUFACTURING PLATED STEEL SHEET HAVING EXCELLENT SURFACE QUALITY AND PRESS FORMABILITY, AND PLATED STEEL SHEET MANUFACTURED THEREBY**
VERFAHREN ZUR HERSTELLUNG VON PLATTIERTEM STAHLBLECH MIT HERVORRAGENDER OBERFLÄCHENQUALITÄT UND PRESSFORMBARKEIT SOWIE AUF DIESE WEISE HERGESTELLTES PLATTIERTES STAHLBLECH
PROCÉDÉ DE FABRICATION D'UNE TÔLE D'ACIER PLAQUÉ AYANT D'EXCELLENTES QUALITÉ DE SURFACE ET APTITUDE AU FORMAGE À LA PRESSE ET TÔLE D'ACIER PLAQUÉ AINSI FABRIQUÉE

(30) Priority: 23.09.2015 KR 20150134771
(43) Date of publication of application: 01.08.2018
(73) Proprietor: POSCO, Gyeongsangbuk-do 790-300 (KR)
(72) Inventor: JEON, Sun-Ho, Gwangyang-si Jeollanam-do 57807 (KR); PARK, Jun-Seok, Gwangyang-si Jeollanam-do 57807 (KR)
(74) Representative: Zech, Stefan Markus
(86) International application number: PCT/KR2016/010714
(87) International publication number: WO 2017/052306

(56) References cited:
- EP-A1- 0 540 005
- JP-A- H0 515 901
- JP-A- H05 154 504
- JP-A- H06 344 004
- JP-A- H10 152 756
- JP-A- H10 152 756
- JP-A- 2003 138 364
- JP-A- 2009 249 683
- JP-A- 2010 100 866
- JP-A- 2012 167 355
- KR-B1- 100 868 457

## Description

### [Technical Field]

The present disclosure relates to a plated steel sheet for applications such as an automotive outer panel, and more particularly, to a method for manufacturing a plated steel sheet having excellent surface qualities and press formability, and a plated steel sheet manufactured by the method.

### [Background Art]

Steel sheets plated with materials such as zinc or aluminum have high corrosion resistance, weldability, and paintability, and are thus widely used as steel sheets for automotive outer panels. Such steel sheets used for automotive outer panels are required to have a good aesthetic appearance and high formability in press forming processes as well.

However, unlike plating layers of hot-dip galvannealed steel sheets having a fine concave-convex surface feature formed during galvannealing, plating layers of plated steel sheets, for example, plating layers of hot-dip galvanized steel sheets are pure zinc (eta (η) phase) layers, and thus after a plating process, the plating layers are flat and soft and have low melting point features, thereby easily causing a galling phenomenon in which cohesion between a plating layer and a press die results in separation of the plating layer during a press forming process.

Galling refers to a phenomenon in which a portion of a coating layer peels off and sticks to a surface of a die as in a cold pressure welding process, causing scratches on a surface of a new material or separation of the plating layer from the surface of the die together with a portion of the die when the new material is formed in the die.

This galling phenomenon, occurring when a hot-dip galvanized steel sheet is press formed, is a factor that increases press forming process costs because of significant effects on the lifespan of dies and the surface quality of products manufactured by press forming a plated steel sheet.

Thus, plated steel sheets for automotive outer panels are processed to have fine concave-convex portions on surfaces thereof so as to prevent galling during a press forming process.

Fine concave-convex portions formed on surfaces of plates steel sheets have a function of reducing a contact area with a die during a press forming process and function as oil pockets retaining oils such as press oil, lubricants, or rust preventive oil to reduce sliding friction resistance and damage to dies, thereby preventing galling.

For example, Patent Document 1 discloses a method of improving press formability by projecting solid particles onto a surface of a galvanized steel sheet to adjust the mean roughness Ra of the galvanized steel sheet surface to be within the range of 0.3 µm to 3.0 µm, the peak count PPI of the galvanized steel sheet surface to be within the range of 250 or greater (RPc of 98 or greater), and the mean waviness Wca of the galvanized steel sheet surface to be 0.8 µm, and Patent Document 2 discloses a method of improving galling and image clarity by rolling a galvanized steel sheet using skin pass rolls having regular concave-convex portions formed by laser texturing so as to adjust the sum of volumes of concave portions per unit area of the galvanized steel sheet to be within the range of 0.0001 mm² to 0.01 mm² In addition, Patent Document 3 discloses a method of preventing cohesion by reducing friction between a plating layer and a die using a lubrication layer formed by electroplating a hot-dip galvannealed steel sheet with a phosphate solution containing manganese (Mn) and nickel (Ni).

Although the mean surface roughness Ra and surface peak number RPc of a plated steel sheet on which fine concave-convex portions are formed are maintained within the ranges as described in Patent Document 1, or the sum of volumes of concave portions per unit area of a galvanized steel sheet is adjusted to be a certain value or greater as described in Patent Document 2, the amount of oil retention and frictional characteristics of the steel sheets vary with the shape of surface concave-convex portions, resulting in markedly different galling behaviors during a press forming process.

That is, although fine concave-convex portions are formed on a galvanized steel sheet by using skin pass rolls processed by shot blasting, electro discharge texturing, laser texturing, electro beam texturing, TopoChrom texturing, or the like, or surface roughness indexes such as Ra or RPc and the sum of volumes of concave portions per unit area of a galvanized steel sheet are adjusted to be within the above-mentioned ranges by directly projecting solid spherical particles onto the galvanized steel sheet to form indentations, these methods only have a function of retaining an excessive lubricant and do not have a function of providing lubrication and reducing friction between a die and the galvanized steel sheet.

In addition, the method disclosed in Patent Document 3 is not economical because an addition expensive lubrication process is required to improve friction characteristics and press formability of a plated steel sheet. In addition, the method disclosed in Patent document 3 deteriorates weldability, adhesiveness, etc.
(Patent Document 1) Korean Patent Application Laid-open Publication No. 2002-0068525
(Patent Document 2) Japanese Patent Application Laid-open Publication No. 1995-136701
(Patent Document 3) Korean Patent Application Laid-open Publication No. 2007-0087723

Moreover, EP 0 540 005 A1 discloses a hot dip galvanized steel sheet with a roughness skewness between -0.3 and 0.1. Furthermore, JPH 05154504 discloses a rolling method implementing multiple passes of dull rolling.

### [Disclosure]

### [Technical Problem]

Aspects of the present disclosure provide a method for improving the press formability of a plated steel sheet by reducing a contact area with a press die and increasing an oil pocket effect to decrease sliding friction when a press forming process is performed on the plated steel sheet, and a plated steel sheet manufactured by the method and having excellent surface qualities and press formability.

### [Technical Solution]

An aspect of the present disclosure is method for manufacturing a plated steel sheet having excellent surface qualities and press formability as set according to claim 1. Another aspect of the present disclosure is a plated steel sheet having excellent surface qualities and press formability as set according to claim 4.

### [Advantageous Effects]

The present disclosure provides a plated steel sheet having effectively reduced sliding friction resistance with respect to a press die to prevent a galling phenomenon in which a plating layer is separated from the plated steel sheet during a press forming process.

In addition, since the plated steel sheet of the present disclosure has excellent surface qualities and press formability, the plated steel sheet may be usefully used as a material for automotive outer panels.

### [Description of Drawings]

FIG. 1 illustrates surface shapes of hot-dip galvanized steel sheets having similar mean surface roughness Ra and peak numbers per unit area RPc.
FIG. 2 illustrates coefficients of friction µ measured from hot-dip galvanized steel sheets having different roughness skewness values Rsk.

### [Best Mode]

A method of properly adjusting surface roughness indexes of a plated steel sheet such as mean roughness Ra, a peak number per unit length RPc, and the sum of volumes of concave portions per unit area has been proposed to prevent galling when a press forming process is performed on a plated steel sheet for an automotive outer panel. However, it has been confirmed that sliding friction between a die and a plated steel sheet is not effectively reduced by adjusting only such roughness indexes.

Thus, the inventors have carefully studied the amount of oil retention, the coefficient of repetitive friction, and the degree of machining defect formation of a plated steel sheet in connection with fine concave-convex portions formed on the plated steel sheet, so as to propose a method of preventing galling when a press forming process is performed on a plated steel sheet for an automotive outer panel.

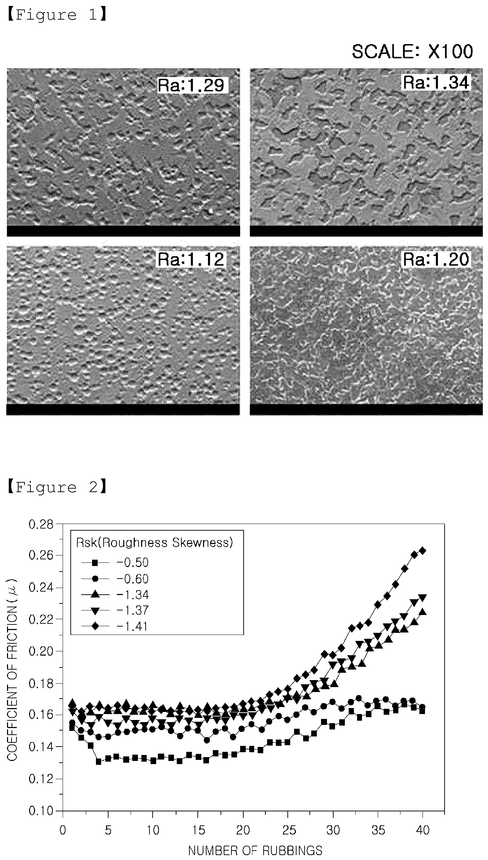

As a result, it has been found that although plated steel sheets have similar mean surface roughness Ra and peak numbers per unit length RPc, the plated steel sheets may have very different surface shapes as illustrated in FIG. 1. That is, although plated steel sheets have similar surface roughness indexes such as mean roughness Ra, a peak number per unit length RPc, and the sum of volumes of concave portions per unit area, characteristics of the plated steel sheets such as the amount of oil retention, the coefficient of repetitive friction, and the formation of machining defects were markedly different, and it can be seen that the amount of oil retention, the coefficient of repetitive friction, and the degree of machining defect formation of a plated steel sheet are determined by the shape of fine concave-convex portions formed on a surface of the plated steel sheet.

In particular, it has been found that the coefficient of repetitive friction and galling characteristics of a plated steel sheet are markedly dependent on a lubricant filled profile valley area V2 functioning as a lubricant reservoir and roughness skewness indicating the sizes and shape of peak and valleys of fine concave-convex portions of the plated steel sheet.

In particular, as shown in FIG. 2, the coefficient of friction of plated steel sheets varies largely with the increase of the coefficient of repetitive friction of the plated steel sheets according to the roughness skewness Rsk of the plated steel sheets.

The roughness skewness Rsk is similar to the ratio of a peak height and a valley depth (peak height/valley depth). When the roughness skewness Rsk has a positive (+) value, the peak height is greater than the valley depth, and when the roughness skewness Rsk has a negative (-) value, the peak height is less than the valley depth.

In addition, V2 is a shape factor indicating a profile area of fine concave-convex portions in which oil such as a lubricant may remain.

Therefore, if the roughness skewness Rsk of fine concave-convex portions formed on a surface of a plated steel sheet through a skin pass rolling process has a positive (+) value, the area of the plated steel sheet making contact with a die decreases and V2 functioning as a lubricant reservoir increases during a forming process. However, if the roughness skewness Rsk has a negative (-) value, the contact area with a die increases, and thus V2 decreases.

Thus, the present disclosure proposes a method of increasing the roughness skewness Rsk of fine concave-convex portions formed on a plated steel sheet through a skin pass rolling process and thus increasing V2 which is an oil pocket area in which a lubricant may remain, so as to prevent galling and improve press formability when a press forming process is performed on the plated steel sheet.

Hereinafter, aspects of the present disclosure will be described in detail.

According to an aspect of the present disclosure, a method for manufacturing a plated steel sheet having excellent surface qualities and press formability includes manufacturing a plated steel sheet by plating a base steel sheet; and performing a skin pass rolling process on the plated steel sheet by inserting the plated steel sheet into a skin pass mill.

In the method for manufacturing a plated steel sheet of the present disclosure, a plated steel sheet may be manufactured by plating a base steel sheet by any plating method without limitations.

For example, a hot-dip galvanizing method or an electroplating method may be used.

If the hot-dip plating method is used, the plated steel sheet may be, for example, a hot-dip galvanized steel sheet, a hot-dip aluminized steel sheet, or an aluminum alloy plated steel sheet, or may be a hot-dip galvannealed steel sheet obtained by performing an alloying process on the hot-dip galvanized steel sheet.

In addition, if the electroplating method is used, the plated steel sheet may be, for example, an electro-galvanized steel sheet or an electro-galvannealed steel sheet.

In addition, the base steel sheet is not limited to a particular steel sheet as long as the base steel sheet can be plated. For example, a cold-rolled steel sheet may be used as the base steel sheet.

The plated steel sheet manufactured as described above is inserted into a skin pass mill to perform a skin pass rolling process on the plated steel sheet, and in the present disclosure, shape factors of rolls used in the skin pass rolling process are controlled.

In the present disclosure, the skin pass rolling process is a key process to attain objectives of the present disclosure, and the surface quality and press formability of the plated steel sheet
are finally improved
by performing the skin pass rolling process under optimized conditions to be described later.

In particular, the plated steel sheet having excellent surface qualities and press formability of the present disclosure has
roughness skewness Rsk within the range of -0.8 or greater, V2 indicating an oil pocket area within the range of 300 nm² or greater, preferably an oil retention amount of 0.7 g/m² or greater, and a coefficient of repetitive friction µ (= frictional force/load) indicating sliding friction with a press die within the range of 0.2 or less, and thus galling may not occur.

If the roughness skewness Rsk of fine concave-convex portions of the plated steel sheet is less than -0.8, V2 may be less than 300 nm², and the amount of oil retention may decrease. In this case, during a press forming process, sufficient lubrication may not be obtained, thereby increasing sliding friction resistance and leading to separation of a plating layer and galling.

Thus, the roughness skewness Rsk of the skin pass rolls is controlled to adjust the roughness skewness Rsk of the plated steel sheet to be -0.8 or greater and V2 of the plated steel sheet to be 300 nm² or greater.

In more detail, since fine concave-convex portions are formed on the plated steel sheet by transferring (copying) concave-convex portions formed on the surfaces of the skin pass rolls to the surface of the plated steel sheet, the roughness skewness Rsk of the skin pass rolls may be the opposite of the roughness skewness Rsk of the fine concave-convex portions of the plated steel sheet.

In particular, as described above, so as to adjust the roughness skewness Rsk of the plated steel sheet to be -0.8 or greater, particularly to be positive (+), the roughness skewness Rsk of the rolls is negative (-) within the range of -0.15 to -0.5.

If rolls having a positive (+) roughness skewness value greater than -0.15 are used in the skin pass rolling process, although rolling force is increased, it is impossible to adjust the roughness skewness Rsk of the fine concave-convex portions of the plated steel sheet to be -0.8 or greater and V2 to be 300 nm² or greater.

However, if the roughness skewness Rsk of the rolls is less than -0.5, the roughness skewness Rsk and V2 of the fine concave-convex portions of the plated steel sheet is increased. In this case, however, it may be impossible to adjust the roughness skewness Rsk of the rolls to be less than -0.5 by a general method of forming fine concave-convex portions on skin pass rolls such as electro discharge texturing (EDT), laser texturing (LT), electro beam texturing (EBT), and TopoChrom texturing, and thus an additional process such as superfinishing may be required to control convex portions of the concave-convex portions. That is, a plurality of processes may have to be repeated to adjust the roughness skewness Rsk of the skin pass rolls to be less than -0.5, thereby incurring more time and costs and leading to uneconomical results.

When the skin pass rolling process is performed using the rolls having roughness skewness Rsk adjusted as described above, rolling force is 150 tons or greater.

If rolling force is less than 150 tons, the fine concave-convex portions of the skin pass rolls are not sufficiently transferred to the surface of the plated steel sheet, and thus it is difficult to guarantee roughness skewness Rsk of -0.8 or greater.

Therefore, rolling force is 150 tons or greater. However, if rolling force is greater than 500 tons, transferring of fine concave-convex portions affects the base steel sheet, and thus it is difficult to obtain desired material characteristics.

Therefore, in the present disclosure, the rolling force is adjusted to be within the range of 150 tons to 500 tons, and preferably within the range of 150 tons to 300 tons.

In addition, according to the present disclosure, after the plated steel sheet is processed through the skin pass rolling process, the plated steel sheet may have surface roughness Ra and a peak number per unit length RPc equal to or similar to those of general plated steel sheets for automotive outer panels, preferably within the range of 0.8 µm to 1.5 µm and the range of 75/cm or greater, respectively.

Hereinafter, a plated steel sheet will be described in detail according to another aspect of the present disclosure.

The plated steel sheet of the present disclosure includes a base steel sheet and a plating layer formed on the base steel sheet and having roughness skewness Rsk of -0.8 or greater and an oil pocket area V2 of 300 nm² or greater.

The plating layer may be a zinc plating layer, an aluminum plating layer, a zinc alloy plating layer, or an aluminum alloy plating layer. However, the plating layer is not limited thereto.

The plated steel sheet of the present disclosure is manufactured by the above-described method using rolls having roughness skewness Rsk of -0.5 to -0.15 in a skin pass rolling process so as to adjust the roughness skewness Rsk and the oil pocket area V2 of the plated steel sheet to be -0.8 or greater and 300 nm² or greater, respectively, and thus the plated steel sheet has excellent surface qualities and press formability.

In particular, when a press forming process is performed on the plated steel sheet of the present disclosure, the coefficient of repetitive friction of the plated steel sheet is low at 0.2 or less with respect to a press die, thereby preventing a galling phenomenon occurring when a press forming process is performed on existing plated steel sheets for automotive outer panels.

### [Mode for Invention]

Hereinafter, the present disclosure will be described more specifically through examples. However, the following examples should be considered in a descriptive sense only and not for purposes of limitation. The scope of the present invention is defined by the appended claims.

### (Examples)

Cold-rolled steel sheets having a composition of 0.002%C-0.003%Si-0.08%Mn-0.028%Al-0.0114%P-0.0052%S were prepared as base steel sheets, and a hot-dip galvanizing process was performed on the cold-rolled steel sheets to obtain hot-dip galvanized steel sheets having a plating weight of 60 g/m² on each side thereof. Thereafter, a skin pass rolling process was performed on the hot-dip galvanized steel sheets while varying rolling force within the range of 100 tons to 300 tons by using skin pass work rolls prepared by electro discharge texturing (EDT) or EDT and superfinishing, and TopoChrom texturing (TCT) and having mean roughness Ra of 2.4 µm to 2.7 µm, a peak number per unit length RPc of 110/cm to 142/cm, and roughness skewness Rsk of -0.5 to 0.176, so as to transfer fine concave-convex portions to surfaces of the hot-dip galvanized steel sheets.

After the skin pass rolling process, roughness indexes such as mean roughness Ra and a peak number per unit area RPc, and shape indexes such as roughness skewness Rsk and V2 of the fine concave-convex portions formed on the hot-dip galvanized steel sheets were measured using a surface roughness gauge (NT8000 by Veeco), and results of the measurement are shown in Table 1 below.

In this case, the oil retention of the hot-dip galvanized steel sheets was measured by cutting the hot-dip galvanized steel sheets to prepare 30 mm x 30 mm samples, drying and weighing the samples, dipping the samples into lubricant P-340N, stacking 15 samples, pressing the stacked samples using a pressing machine with a force of 35 tons for 10 minutes so as to remove the lubricant from the samples except for concave portions of the samples, weighing the samples, and dividing measured weights by an evaluation area.

In addition, galling characteristics were evaluated by measuring a coefficient of repetitive friction and counting the number of rubbings at which a plating layer was separated during a repetitive friction test. The coefficient of repetitive friction was measured by measuring the coefficient of friction of the hot-dip galvanized steel sheets using a plane repetitive friction coefficient tester after rubbing a length of 250 mm of each of the hot-dip galvanized steel sheets 15 times with a 25 mm x 35 mm tip under a load of 6.1 MPa at a rate of 120 mm/s.

In addition, press formability was evaluated by observing separation of a plating layer with a scanning electron microscope (SEM) according to the number of rubbings in the repetitive friction test.

**[Table 1]**

| No | Skin pass rolls | | | | Surface roughness | | Surface shape indexes | | Oil retention (g/m²) | Coefficient of repetitive friction | Press forming defects | | Examples |
|---|---|---|---|---|---|---|---|---|---|---|---|---|---|
| | * Ra (µm) | RPc (/cm ) | Rsk | Rolli ng force (tons ) | Ra (µm) | RPc (/cm) | Rsk | V2 (nm² ) | | | Number of rubbings | Defects | |
| 1 | 2.7 | 110 | 0.144 | 150 | 1.29 | 78 | -0.97 | 250 | 0.44 | 0.268 | 7 | Yes | ** CE1 |
| 2 | 2.7 | 110 | 0.125 | 150 | 1.29 | 78 | -1.38 | 233 | 0.34 | 0.279 | 7 | Yes | CE2 |
| 3 | 2.7 | 110 | 0.108 | 150 | 1.26 | 78 | -1.42 | 220 | 0.33 | 0.337 | 5 | Yes | CE3 |
| 4 | 2.4 | 123 | 0.152 | 150 | 1.09 | 85 | -1.21 | 316 | 0.36 | 0.252 | 2 | Yes | CE4 |
| 5 | 2.4 | 135 | 0.176 | 150 | 0.93 | 87 | -1.34 | 263 | 0.33 | 0.252 | 2 | Yes | CE5 |
| 6 | 2.4 | 142 | 0.168 | 150 | 1.01 | 90 | -1.27 | 295 | 0.38 | 0.244 | 2 | Yes | CE6 |
| 7 | 2.7 | 120 | -0.10 | 150 | 1.65 | 75.6 | -0.92 | 295 | 0.61 | 0.234 | 13 | Yes | CE7 |
| 8 | 2.7 | 120 | -0.15 | 150 | 1.46 | 77.4 | -0.76 | 318 | 0.77 | 0.200 | 15 | No | *** IE1 |
| 9 | 2.7 | 120 | - 0.205 | 150 | 1.45 | 78.7 | -0.6 | 347 | 0.78 | 0.194 | 15 | No | IE2 |
| 10 | 2.7 | 120 | -0.29 | 150 | 1.44 | 78.6 | -0.48 | 375 | 0.86 | 0.189 | 15 | No | IE3 |
| 11 | 2.7 | 120 | - 0.325 | 150 | 1.44 | 78.3 | -0.37 | 415 | 1.00 | 0.184 | 15 | No | IE4 |
| 12 | 2.7 | 120 | -0.29 | 150 | 1.38 | 79.1 | -0.27 | 408 | 1.05 | 0.182 | 15 | No | IE5 |
| 13 | 2.7 | 120 | -0.5 | 150 | 1.34 | 95.6 | -0.05 | 567 | 1.23 | 0.152 | 15 | No | IE6 |
| 14 | 2.7 | 110 | 0.125 | 100 | 0.97 | 85 | -1.54 | 198 | 0.33 | 0.337 | 7 | Yes | CE8 |
| 15 | 2.7 | 110 | 0.125 | 200 | 1.29 | 87 | -1.34 | 229 | 0.43 | 0.260 | 13 | Yes | CE9 |
| 16 | 2.7 | 110 | 0.125 | 300 | 1.53 | 90 | -1.05 | 269 | 0.46 | 0.243 | 13 | Yes | CE10 |
| 17 | 2.4 | 142 | 0.168 | 100 | 0.86 | 90 | -1.44 | 253 | 0.28 | 0.272 | 2 | Yes | CE11 |
| 18 | 2.4 | 142 | 0.168 | 200 | 1.12 | 115 | -1.37 | 367 | 0.31 | 0.258 | 7 | Yes | CE12 |
| 19 | 2.4 | 142 | 0.168 | 300 | 1.31 | 128 | -0.98 | 340 | 0.33 | 0.260 | 7 | Yes | CE13 |
| 20 | 2.7 | 120 | -0.15 | 100 | 1.45 | 76.2 | -0.84 | 284 | 0.57 | 0.224 | 13 | Yes | CE14 |
| 21 | 2.7 | 120 | -0.15 | 200 | 1.45 | 78.6 | -0.54 | 434 | 0.89 | 0.186 | 15 | No | IE7 |
| 22 | 2.7 | 120 | -0.15 | 250 | 1.46 | 80.3 | -0.45 | 407 | 1.05 | 0.183 | 15 | No | IE8 |
| 23 | 2.7 | 120 | -0.15 | 300 | 1.48 | 93.4 | -0.24 | 519 | 1.16 | 0.171 | 15 | No | IE9 |

| | | | | | | | | | | | | | |
|---|---|---|---|---|---|---|---|---|---|---|---|---|---|
| *Ra: Mean Roughness, **CE: Comparative Example, ***IE: Inventive Example | | | | | | | | | | | | | |

As shown in Table 1 above, hot-dip galvanized steel sheets (Inventive Examples 1 to 9), on which the skin pass rolling process was performed using rolls having roughness skewness Rsk within the range of -0.15 to -0.5 with rolling force of 150 tons to 300 tons, had shape indexes, that is, roughness skewness Rsk and V2 within the range of -0.8 or greater and the range of 300 nm² or greater, respectively, and thus, oil retention within the range of 0.7 g/m² or greater and a coefficient of repetitive friction within the range of 0.2 or less. Thus, the hot-dip galvanized steel sheets had low sliding friction resistance and good galling characteristics because separation of a plating layer was not observed after 15 rubbings.

However, in the case of using skin pass rolls having roughness skewness Rsk within the range of more than -0.15 (Comparative Examples 1 to 13) or the case in which rolling force was less than 150 tons even though the roughness skewness Rsk of rolls was -0.15 Comparative Example 14), hot-dip galvanized steel sheets had roughness skewness Rsk within the range of less than -0.8, V2 within the range of less than 300 nm², an oil retention within the range of less than 0.7 g/m², and a coefficient of repetitive friction within the range of 0.21 or greater, and poor galling characteristics because separation of a plating layer occurred before rubbing was performed 15 times.

## Claims

1. A method for manufacturing a plated steel sheet having excellent surface qualities and press formability, the method comprising: manufacturing a plated steel sheet by plating a base steel sheet; and performing a skin pass rolling process on the plated steel sheet by inserting the plated steel sheet into a skin pass mill,
wherein the skin pass rolling process is performed using rolls having roughness skewness Rsk within a range of -0.5 to -0.15 with a rolling force of 150 tons to 500 tons.

2. The method of claim 1, wherein after the skin pass rolling process is performed on the plated steel sheet, the plated steel sheet has roughness skewness Rsk within a range of -0.8 or greater and an oil pocket area V2 within a range of 300 nm² or greater.

3. The method of any one of claims 1 or 2, wherein the plated steel sheet is one of a hot-dip galvanized steel sheet, a hot-dip aluminized steel sheet, an aluminum alloy plated steel sheet, an electro-galvanized steel sheet, an electro-galvannealed steel sheet, and a hot-dip galvannealed steel sheet.

4. A plated steel sheet having excellent surface qualities and press formability, the plated steel sheet comprising a base steel sheet and a plating layer formed on the base steel sheet,
wherein the plated steel sheet has roughness skewness Rsk within a range of -0.8 or greater, an oil pocket area V2 within a range of 300 nm² or greater, and a coefficient of repetitive friction within a range of 0.2 or less.

## Patentansprüche

1. Verfahren zum Herstellen eines plattierten Stahlblechs mit ausgezeichneten Oberflächenqualitäten und ausgezeichneter Pressformbarkeit, wobei das Verfahren umfasst: Herstellen eines plattierten Stahlblechs durch Plattieren eines Grundstahlblechs; und Durchführen eines Dressierwalzprozesses an dem plattierten Stahlblech durch Einführen des plattierten Stahlblechs in ein Dressierwalzwerk,
wobei der Dressierwalzprozess unter Verwendung von Walzen, die eine Rauigkeitsasymmetrie Rsk in einem Bereich von -0,5 bis -0,15 haben, mit einer Walzkraft von 150 Tonnen bis 500 Tonnen erfolgt.

2. Verfahren nach Anspruch 1, wobei, nachdem der Dressierwalzprozess am plattierten Stahlblech durchgeführt wurde, das plattierte Stahlblech eine Rauigkeitsasymmetrie Rsk in einem Bereich von -0,8 oder größer und eine Öltaschenfläche V2 in einem Bereich von 300 nm² oder größer hat.

3. Verfahren nach einem der Ansprüche 1 oder 2, wobei das plattierte Stahlblech ein schmelztauchgalvanisiertes Stahlblech, ein schmelztauchaluminiertes Stahlblech, ein mit Aluminiumlegierung plattiertes Stahlblech, ein elektrogalvanisiertes Stahlblech, ein nach der Schmelztauchgalvanisierung elektrowärmebehandeltes Stahlblech und ein nach der Schmelztauchgalvanisierung wärmebehandeltes Stahlblech ist.

4. Plattiertes Stahlblech mit ausgezeichneten Oberflächenqualitäten und ausgezeichneter Pressformbarkeit, wobei das plattierte Stahlblech ein Grundstahlblech und eine auf dem Grundstahlblech ausgebildete Plattierungsschicht umfasst,
wobei das plattierte Stahlblech eine Rauigkeitsasymmetrie Rsk in einem Bereich von -0,8 oder größer und eine Öltaschenfläche V2 in einem Bereich von 300 nm² oder größer und einen Koeffizienten wiederholter Reibung in einem Bereich von 0,2 oder weniger hat.

## Revendications

1. Procédé de fabrication d'une tôle d'acier plaqué ayant d'excellentes qualités de surface et une excellente aptitude au formage à la presse, le procédé comprenant : la fabrication d'une tôle d'acier plaqué en plaquant une tôle d'acier de base ; et l'exécution d'un processus de laminage par écrouissage superficiel sur la tôle d'acier plaqué en insérant la tôle d'acier plaqué dans un laminoir d'écrouissage superficiel,
sachant que le processus de laminage par écrouissage superficiel est effectué au moyen de galets présentant une asymétrie de rugosité Rsk comprise dans une plage de -0,5 à -0,15 avec une force de laminage de 150 tonnes à 500 tonnes.

2. Le procédé de la revendication 1, sachant qu'après que le processus de laminage par écrouissage superficiel est effectué sur la tôle d'acier plaqué, la tôle d'acier plaqué présente une asymétrie de rugosité Rsk comprise dans une plage de -0,8 ou plus et une zone de poche d'huile V2 comprise dans une plage de 300 nm² ou plus.

3. Le procédé de l'une quelconque des revendications 1 ou 2, sachant que la tôle d'acier plaqué est l'une d'une tôle d'acier galvanisée par immersion à chaud, d'une tôle d'acier aluminisée par immersion à chaud, d'une tôle d'acier plaqué d'alliage d'aluminium, d'une tôle d'acier galvanisée par électrolyse, d'une tôle d'acier recuite par galvanisation par électrolyse, et d'une tôle recuite par galvanisation par immersion à chaud.

4. Tôle d'acier plaqué ayant d'excellentes qualités de surface et une excellente aptitude au formage à la presse, la tôle d'acier plaqué comprenant une tôle d'acier de base et une couche de placage formée sur la tôle d'acier de base,
sachant que la tôle d'acier plaqué présente une asymétrie de rugosité Rsk comprise dans une plage de -0,8 ou plus, et une zone de poche d'huile V2 comprise dans une plage de 300 nm² ou plus, et un coefficient de friction répétitive comprise dans une plage de 0,2 ou moins.
